# EUROPEAN PATENT SPECIFICATION

(11) **EP 0 480 861 B1**
(45) Date of publication and mention of the grant of the patent: **30.07.1997**
(21) Application number: 91500106.9
(22) Date of filing: 24.09.1991
(51) Int. Cl.: B01D 1/12, B08B 17/02

(54) **Method and apparatus for evaporating a liquid**
Verfahren und Vorrichtung zur Verdampfung einer Flüssigkeit
Procédé et dispositif d'évaporation d' un liquide

(30) Priority: 11.10.1990 US 596047
(43) Date of publication of application: 15.04.1992
(73) Proprietor: Huercanos Alvarez, Joaquin, E-20009 San Sebastian (ES)
(72) Inventor: Huercanos Alvarez, Joaquin, E-20009 San Sebastian (ES)
(74) Representative: Ungria Lopez, Javier

(56) References cited:
- DE-C- 871 440
- FR-A- 884 254
- FR-A- 2 584 939
- FR-E- 64 780
- US-A- 3 165 435
- John Perry, handbook of chemical engineer's, McGraw-Hill, 1941, pages 1983-1984
- "Technique de l' ingénieur", chapter J-1740, selected pages J-1740 2,3,4,6,8-10

## Description

The present invention refers to a method of concentrating liquid and to an evaporation unit for the concentration of liquid solutions and particularly to a method and unit which prevent and/or eliminate the formation of scales of the solids of the solution on heat exchange surfaces. The vapors coming from the evaporation flow from the evaporation enclosure(s) to the feed enclosure of the solution to be evaporated, to increase the mixing speed of liquid and vapors that pass through the evaporation area thus preventing the precipitation of particles or deposits on the heat exchange surfaces.

The downflow system corresponds to one of the classic types of evaporation. In the downflow system, the liquid is forced to flow vertically along the essentially vertical exchange surfaces, generating vapor of the liquid that flows together with the latter. The direction of flow is produced by the effect of gravity and by the difference of pressures existing between the top feed enclosure and the bottom evaporation enclosure, both acting in the same direction.

The heat exchange surfaces can consist of plates or pipes, with a thermal fluid, such as vapor, flowing between the heat transmission walls.

Examples of the downflow evaporation systems equipped with tubes are described in detail in U.S. patents 4076576 of Mattala and 4641706 of Haynie, which are cited here simply as a reference. The U.S. patent 4586565 of Hallstrom et al. describes in detail a downflow system that uses plates as heat transmission means and that is also cited here as a reference.

One of the most serious problems that are present in evaporation apparatus is the deposit of solid particles that remain adhered to the heat exchange surfaces. When the liquid evaporates the dissolved solids concentrate until they reach the solubility coefficient of each one of the components, exceeding that which, the dissolved solids begin to precipitate in crystals or in the amorphous state, or in the form of rubber or polymers. Like, on the other hand, the higher the solid content in the solution is, the greater the viscosity, such as the release of water by evaporation continues, the liquid solution tends to move more slowly and consequently the salts or "rubbers" precipitated begin to adhere to the walls of the heat exchange surfaces. Speaking technically this deposit on the surfaces is called "scale."

Once these precipitated particles have begun to adhere to the walls of the heat exchanger, additional crystals and particles will continue to adhere with an exponential type soiling speed.

This deposit or scale is equivalent to a reduction of the useful heat transmission area, therefore, the global transmission , in other words, the amount of heat exchanged per unit of time and temperature, and for a specific transmission surface reduces.

This deposit or scale upon reducing the evaporation capacity per unit of time, can cause the need to stop the operation in order to clean, beginning again once this has been finished. Consequently, all designers and/or manufacturers of concentration equipment have put a lot of effort into solving this serious problem.

FR-A-884254 describes (cf. page 2 lines 65-93 and figure 2) a device comprising a heat exchange portion formed by tubes through which liquid is circulated, and means for circulation of the vapors generated during evaporation so that these vapors are mixed with the liquid at the inlet end of the heat exchange portion so that the velocity of the mixture is increased at the lower portion of the tubes. The injection of vapour creates an emulsion of vapour and liquid in the tubes.

Also FR-E-64,780 (Certificate of Addition to the Frenc Patent No. 1,081,418) discloses the injection of a gas in the tubes of a heat exchange portion of an evaporator unit.

FR-A-2.584.939 discloses an evaporator unit where the heat exchange portion is devided into several sectors.

Consequently, an object of the present invention consists of providing a concentration unit or apparatus in which the vapors from the liquid subjected to evaporation, flow at a sufficient speed to prevent the precipitated particles from adhering to the walls or heat exchange surfaces.

Another object of the present invention corresponds to providing a concentrator that continuously prevents the formation of deposits without the need to stop the evaporation operation of the apparatus.

Another object is to provide an evaporation unit which as a result of the system applied, obtains a higher heat transmission coefficient than that corresponding to other evaporation units equipped with identical walls or heat exchange surfaces.

The mentioned objects are attained by means of the method and the evaporation unit as defined in the independent claims - Preferred embodiments of the invention are as defined in the dependent claims.

Other outstanding objects, advantages and features of the present invention will be inferred or remain clear from the detailed description that is given hereinafter and which, together with that provided by the attached drawings, reveal the scope covered by the invention.

Fig. 1 corresponds to a raised partial view of an evaporation unit, in accordance with a first embodiment of the present invention.

Fig. 2 corresponds to a schematic view in perspective of the evaporation unit of fig. 1 from which the tube bank has been removed to provide a better clearer view.

Fig. 3 corresponds to a top plan view in section taken along line A-B of fig 1.

Fig. 4 is a raised partial view of a second embodiment of the present invention.

Fig. 5 corresponds to a raised partial view of a third embodiment of the present invention.

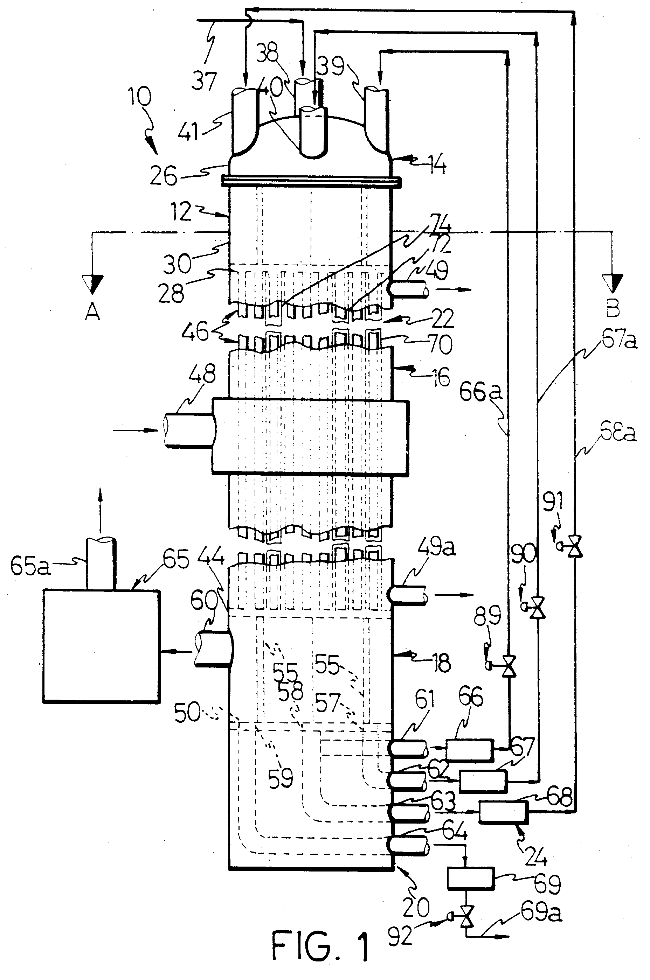

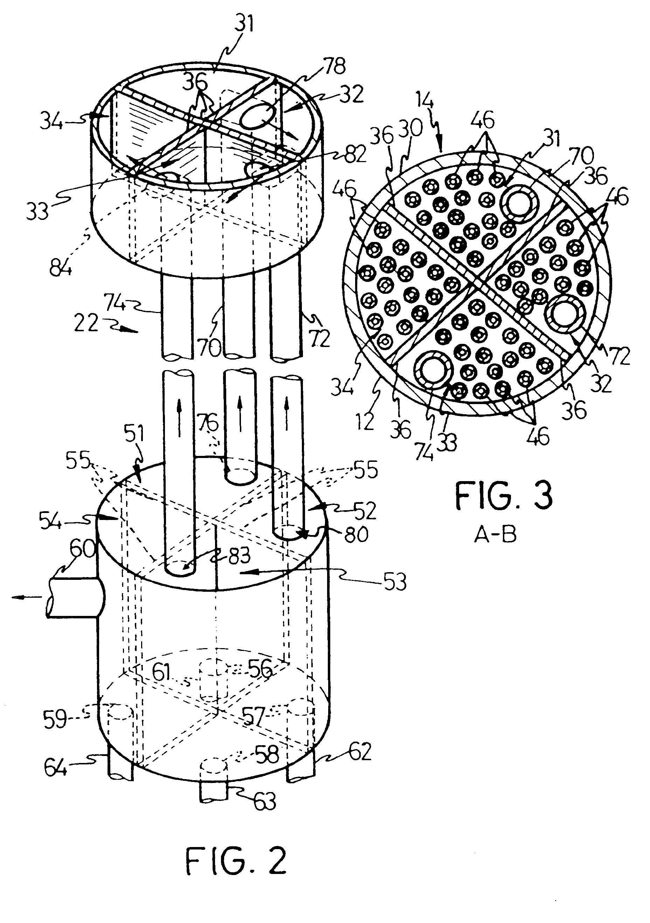

Referring first of all to fig. 1, an evaporation unit is shown in accordance with the present invention and includes a casing 12 with an inlet head 14 in its top end, to receive the liquid that is going to be evaporated; a heat exchanger 16 located under enclosure 14, through which the liquid will be evaporated and the solids in solution consequently concentrated; a bottom enclosure or base 18 located under the exchanger 16 to receive the partially concentrated solution or at its final solution, depending on the corresponding evaporation stage, together with the vapors from the evaporation; and a base 20 connected underneath to 18 to support the unit. The evaporation unit 10 also includes the device 22, that is seen in fig. 2, for the flow of the vapors from the evaporation, rigidly connected by welding for example, between the top enclosure or head 14 and the base 18; and the liquid flow device 24 rigidly connected to the casing 12.

Through the unit of ducts 22 the vapors - generally steam - flow, generated by the evaporation of the liquid that passes through the heat exchanger 16 and penetrates in the head 14, mixing with the liquid in such a way that the mixture passes through the exchanger with enough speed to prevent the precipitated particles from adhering to the exchange surfaces. At high speeds the liquid converts into drops that knock against the exchange surfaces with enough energy so as to prevent the deposit of precipitated particles or to loosen them.

The evaporation unit 10 can consist of a simple effect or be used together with a plurality of units 10 to form a multiple effect evaporation system. The unit 10 corresponds to the downflow evaporation type

For simplication purposes, only a simple effect downflow one will be discussed in detail.

The head or feed enclosure 14 remains formed by a cover 26, a first tubular plate 28 and a part of cylindric wall 30 of the circular casing 12, that extends between the cover 26 and the first tubular plate 28.

As can be seen in figs. 2 and 3, the head 14 is divided into 4 feed enclosures of the same dimensions, 31, 32, 33 and 34, by means of deflectors 36. The deflectors 36 are rigidly coupled to the first tubular plate 28 and to the cover 26, forming watertight enclosures, to separate the feed liquid in each one of the enclosures 31-34 of the feed liquid into the other sections, in such a way that the liquids cannot mix together. The feed pipes, 38, 39, 40 and 41 are rigidly coupled to the cover 26, to lead the solution to be concentrated from the feed tubes, 38, 39, 40 and 41 to the feed enclosures, 31, 32, 33 and 34, respectively.

The heat exchanger 16 is defined by one part of the cylindric wall 30 of the cylindric casing 12, that extends between the first tubular plate 28 and a second tubular plate 44. The heat exchange pipes 46 are rigidly connected - by welding or expansion for example -, forming watertight enclosures between the tubular plates 28 and 44, permitting the free and fluid communication between the inlet enclosure 14 and the removal base 18, and preventing at the same time any communication between the thermal fluid on the one hand and the solution or liquid to be evaporated and the vapors generated from another.

Specifically, the first tubular plate 28 has diverse openings, aligned with the top end of one of the heat exchange tube banks 46, so that the feed liquid in each one of the sections 31-34 can be led through the heat exchanger 46 pipes.

A second circular tubular plate 44 has the same number of openings placed in the same geometric position, in such a way that they are aligned with the bottom end of the heat exchange tube bank 46, allowing the outlet of the concentrated liquid and vapors toward the removal enclosure or base 18.

The area of the exchange pipes 46 between the first tubular plate 28 and the second one 44, defines the evaporation area. Consequently, the longer the exchange pipes 46 are the larger the evaporation area. The exchange tube bank 46 is divided into four sectors or exchange pipe sections. The first sector or section is connected or freely communicated to the liquid feed enclosure 31, the second one is freely communicated with the feed enclosure 32, the third one is communicated freely with the feed enclosure 33 and the fourth one is freely communicated with the feed enclosure 34.

An inlet manifold for thermal fluid 48 is coupled solidly to the wall of the cylindric outer casing 30 for the feed of thermal fluid, such as live steam, in the exchange section 16 to heat the four sectors of the exchange bank 46. Each one of the four sectors of the exchange bank 46 is heated by a vapor or thermal fluid of a single or identical quality, in other words, that has the same thermodynamic properties. Consequently, when the tube bank is heated by the thermal fluid, the heat is transferred to the liquid that is passing through the exchange tube bank 46, to produce a concentration of the solids of the solution by evaporation and thereby generating vapors. The exchange section 16 is also equipped with an outlet manifold 49 for the incondensible gases linked to the cylindric wall 30 and placed adjacent to the first tubular plate 28, for removal thereof towards the condenser; and a manifold 49 a linked to the cylindric wall 30, adjacent to the second tubular plate 44, for the removal of condensates from the vapor.

It is clear that the exchange bank 46 can consist of another type of exchange surfaces, such as plates instead of pipes.

The removal enclosure or base 18 is defined as a portion of the cylindric wall 30 of the outer casing 12 that extends from a second circular tubular plate 44 and a 3rd. circular bottom plate 50. The deflectors 55 form four removal sections, 51, 52, 53 and 54, within the removal enclosure 18, in which the required intermediate or final concentration liquids and the vapors coming the latter and the former from the exchange tube bank 46. Each one of the four sections 51-54 is equipped with an outlet manifold, 56, 57, 58 and 59 respectively, for the removal of the final concentration liquid or intermediate concentration ones. Enclosures 51-53 are solidly connected and freely communicated to the steam flow system 22, through the flow ducts 70, 72 and 74, respectively, to remove the vapors from the former as is described below.

On the other hand, the vapors from section 54 from the total evaporation produced by the exchanger are blown off through the removal manifold 60 towards the steam separator 65 and from here towards the following effect or towards the condenser by pipes 65a, if it were the last effect.

Consequently the following effects can use the vapors, generally steam, generated by the preceding effect as thermal fluid to concentrate the solids of the solution in the following effect. In other words, in a multiple effect the inlet manifold 48 of thermal fluid of the second effect, is connected to outlet pipe 65a of the vapor separator of the first effect, to use the vapors generated by the evaporation of the first effect in the concentration within this second effect; likewise in the third effect, the thermal fluid feed manifold 48 is connected to 65a of the second one, to use the vapors generated by the evaporation of the second effect in the solids concentration in the third effect and so on.

The liquid flow device 24 is equipped with four blowoff pipes 61, 62, 63 and 64, rigidly connected to the openings 56-59 respectively of the third plate or circular bottom 50, to remove the concentrated liquid from sections 51-54 respectively and to send it either towards the following section, or to the final concentration receiving deposit, or towards the following effect, by means of pumps 66, 67, 68 and 69. Specifically, pump 66 leads the liquid from the removal enclosure 51 through pipe 66a and feed pipe 39, until the feed enclosure 32.

Pump 67 sends the solution from the removal enclosure 52 through the pipe 67a and from the feed pipe 40 to the alignment enclosure 33. Pump 68 sends the solution from the removal enclosure 53 through the pipes 68a and from the inlet pipe 41 to the feed enclosure 34.

Pump 69 sends the solution from the removal enclosure 54 through the pipe 69a to the storage tank of the concentrated solution to the final concentration or following effect.

As is seen in figs. 2 and 3, the vapor flow system 22 includes three flow ducts 70, 72 and 74 to lead the vapors from evaporation from the outlet enclosure of one of the exchange bank sections 46, to the feed enclosure of another exchange bank section 46. Although in the fig. ducts 70, 72 and 74 are represented inside the casing 12 it is obvious that they can also be located outside.

The first flow duct 70 extends from the removal enclosure 51 of the removal base 18 to the second feed enclosure 32 of the head 14 to lead the vapors from the first removal enclosure 51 to the second feed enclosure 32. The vapors flow at a speed fast enough to prevent the precipitated particles from adhering to the exchange surface of the tubular heat exchanger 46. At high speeds, the flow vapors divide the liquid into drops that act as hammers or scrapers of the exchange surface of the exchanger to remove or loosen continuously the particles that had a tendency to form a scale. Specifically, the bottom end of this first duct 70 is rigidly coupled, by welding for example to the opening 76 of the second tubular plate 44 and the top end thereof is coupled rigidly to the opening 78 located in the deflector 36, to freely communicate the vapors of the outlet enclosure 51 with the feed enclosure 32.

The second flow duct 72 communicates freely, the second removal enclosure 52 with the third feed enclosure 33 to lead the vapors through it. Specifically, the bottom end of this second duct 72 is rigidly coupled, by welding for example, to opening 80 in the second tubular plate 44 and its top end is rigidly coupled to opening 82 located in the deflector 36, to freely communicate the vapors of the outlet enclosure 52 to the feed enclosure 33.

The third flow duct 74 communicates freely, the third removal enclosure 53 with the fourth feed enclosure 34 to lead through it the vapors. Specifically, the bottom end of this third duct 74 is rigidly coupled, by welding for example, to opening 83 in the second tubular plate 44 and the top end thereof is rigidly coupled to opening 84 located in the deflector 36, to freely communicate the vapors from the outlet enclosure 53 to the feed enclosure 34.

Even when the evaporation unit 10 has been represented with four sectors in the exchanger bank 46, it is obvious that the evaporation unit could consist of fewer or more sectors or sections in any variation of arrangements or alignments. And furthermore, even when the evaporation unit 10 has been represented with exchange sectors of the same dimensions and number of pipes, it is obvious that the evaporation unit could be comprised by exchange sectors or sections of a bank of a different size, different number of pipes in each one of them, with diverse materials for the exchange surfaces or different shapes of the exchanger, or that each exchange section had its own casing instead of all the sections within a single casing 12, another position than the vertical one or other aspects.

Referring to figs. 1 and 2, initially, the feed liquid that flows through the pipe 37, penetrates into the evaporation unit (10) through the feed pipe 38, in the feed enclosure 31 of the head 14. Then the liquids passes through a first sector or section of the tubular heat exchange bank 46, that is communicated with the feed enclosure 31 and begins to evaporate generating vapors and thus the solids increase in concentration in the solution or liquid. The liquid evaporates and the solids consequently concentrate by the action of the thermal fluid that circulates through the outside of the heat exchanger pipes 16 heating the pipes of the exchange bank 46 and the liquid or solution that circulates through the tube bank 46. Then the liquid leaves the first section of the tubular exchanger 46 and penetrates into the removal enclosure 51 in which the partially concentrated solution and the generated vapors are separated.

The absolute pressure differential existing between the feed enclosures 31 and 32 makes the vapors flow from the removal enclosure 51 through the flow duct 70 towards the feed enclosure 32.

The partially concentrated solution is sent by pump 66 through the blowoff pipe 61, from the removal enclosure 51 and through the feed pipe 39 up to the feed enclosure 32. The flow of the partially concentrated liquid or solution that flows from the removal enclosure 51 to the feed enclosure 32 is automatically controlled by a control valve 89 which keeps a constant level of liquid inside the removal enclosure 51. The flow vapors are mixed with the partially concentrated liquid or solution in the feed enclosure 32, then being led through the second sector or section of the tubular exchanger 46, at a speed and pressure sufficient enough to increase the speed of the partially concentrated liquid and prevent the precipitated particles or deposits from adhering to the exchange surfaces. Specifically, the mixture of the partially concentrated liquid and of the vapor is led to the second sector or sections of the pipe exchanger 46, connected to the feed enclosure 32 and to the removal enclosure 52, to attain the concentration and consequently generate additional evaporation vapors.

At high speeds the flow vapors divide the liquid into drops that act as scrapers to loosen or eliminate the precipitated particles and deposits that had the tendency to form a scale against the pipe exchanger surfaces 46. The partially concentrated liquid and the vapors generated in the first and second sectors or sections of the pipe exchanger 46 penetrate into the removal enclosure 52, in which the partially concentrated solution or liquid and the vapor generated by evaporation are separated.

The absolute pressure differential existing between the feed enclosures 32 and 33 make the vapors flow from the removal enclosure 52 through duct 72 up to the feed enclosure 33.

The partially concentrated solution is sent by the pump 67, through the blowoff pipe 62, from the removal enclosure 52 and through the feed pipe 40 up to the feed enclosure 33. The flow of the partially concentrated liquid or solution that flows from the removal enclosure 52 up to the feed enclosure 33 is automatically controlled by means of a control valve 90 which keeps a constant level of the liquid inside the removal enclosure 52. The flow vapors are mixed with the partially concentrated liquid or solution in the feed enclosure 33, then being led through the third sector or section of the tubular exchanger 46, at a speed and pressure sufficient enough to increase the speed of the partially concentrated liquid and prevent the precipitated particles or deposits from adhering to the exchange surfaces. Specifically, the mixture of the partially concentrated liquid and of the vapor is led to the third sector or section of the pipe exchanger 46, connected to the feed enclosure 33 and to the removal enclosure 53, to attain the concentration and consequently generate additional evaporation vapors.

The third sector or section of the tubular heat exchange bank 46 is kept scale free due to the high speed of the mixture of liquid and of recirculated vapors, as has been stated above. The partially concentrated liquid and the vapors generated in the first, second and third sectors or sections of the pipe exchanger 46 penetrate into the removal enclosure 53, in which the partially concentrated liquid or solution and the vapor generated by the evaporation are separated.

The absolute pressure differential existing between the feed enclosures 33 and 34 make the vapors flow from the removal enclosure 53 through duct 74 up to the feed enclosure 34.

The partially concentrated solution is sent by the pump 68, through the blowoff pipe 63, from the removal enclosure 53 and through the feed pipe 41 up to the feed enclosure 34. The flow of the partially concentrated liquid or solution that flows from the removal enclosure 53 up to the feed enclosure 34 is automatically controlled by means of a control valve 91 which keeps a constant level of the liquid inside the removal enclosure 53. The flow vapors are mixed with the partially concentrated liquid or solution in the feed enclosure 34, then being led through the fourth sector or section of the tubular exchanger 46, at a speed and pressure sufficient enough to increase the speed of the partially concentrated liquid and prevent the precipitated particles or deposits from adhering to the exchange surfaces. Specifically, the mixture of partially concentrated liquid and of the vapor is led to the fourth sector or section of the pipe exchanger 46, connected to the feed enclosure 34 and to the removal enclosure 54, to attain the concentration and consequently generate additional evaporation vapors.

The fourth sector or section of the tubular heat exchange bank 46 is kept scale free due to the high speed of the mixture of liquid and of recirculated vapors, as has been stated above. The partially concentrated liquid and the vapors generated in the first, second, third and fourth sectors or sections of the pipe exchanger 46 penetrate into the removal enclosure 54, in which the partially concentrated liquid or solution and the vapor generated by the evaporation are separated.

The total amount of vapor generated by the four sections of the tubular exchanger bank 46 leave the evaporator unit 10 through the vapor outlet 60 towards the separator 65 and from there towards the following effect or towards the condenser.

The vapors flow from the separator 65 towards the following effect or towards the condenser, pushed or forced by the absolute pressure difference existing between the separator 65 and the following effect or the condenser. The concentrated solution is sent towards the following effect by means of pump 69 through the blowoff pipe 64.

The flow of the concentrated solution outgoing from the removal enclosure 54 is automatically controlled by the level control valve 92, which keeps a constant level inside the removal enclosure 54.

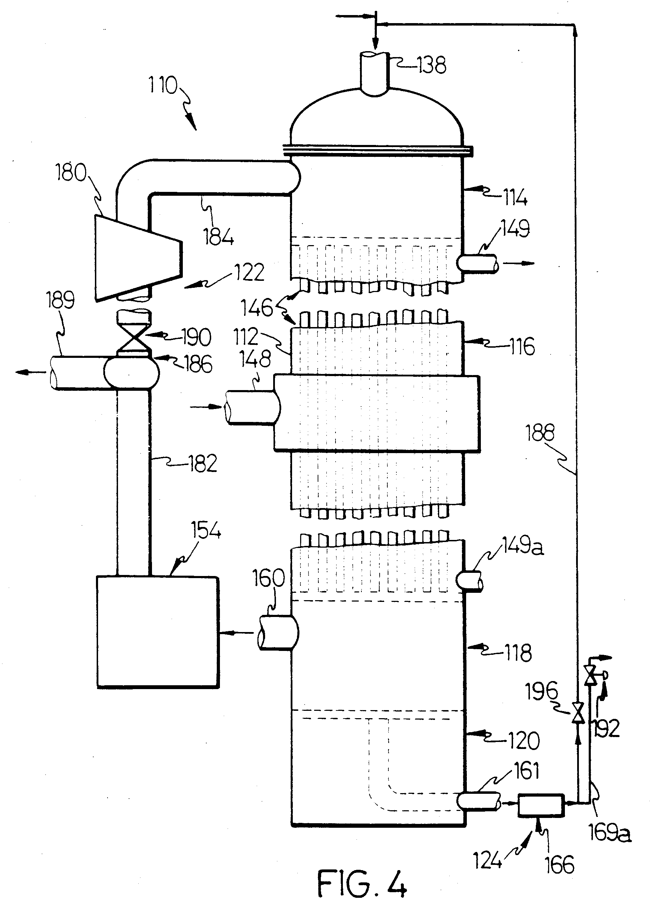

Fig. 4 shows an evaporation unit 110 in accordance with a second embodiment of the present invention.

The evaporation unit 110 is substantially identical to the evaporation unit 10, with the exception that the vapor flow device 22 has been replaced by the flow device 122; the liquid flow device 24 has been replaced by the flow device 124; the feed pipes 38-41 have been replaced by a single feed pipe 138; and the deflectors 36 and 56 have been deleted. Consequently, the evaporation device 110 will not be commented on in detail.

The evaporation device 110 includes an outer casing 112 with a feed enclosure 114 located in the top end thereof, provided to receive from one side the solution or liquid to be concentrated and from the other the recirculation vapors; one heat exchange section 116 located under the feed enclosure 114, provided to concentrate the dissolved solids by means of evaporation of the liquid that flows through the exchange tube bank 146; a removal enclosure 118 to receive the partially concentrated liquid or at the required final concentration together with the evaporation vapors; and a bottom enclosure or base 120, localized underneath the removal enclosure 118. The evaporation unit 110 also includes a vapor recirculation system 122 and a liquid flow device 124.

The vapor recirculation device 122 uses a compressor 180 to make the vapors generated by the tubular exchanger 116 flow at the desired speed. The compressor 180 is freely communicated with the feed enclosure 114 and the removal enclosure 118 through the outlet pipe 160, the steam separator 154 and of the flow ducts 182 and 184. The vapor generated in the heat exchange section 116 is recirculated by means of the recirculation system or device 122 towards the feed enclosure 114 for the purpose of increasing the speed of the solution that flows through the pipes 146 of the exchanger at a sufficient speed so as to prevent the precipitated particles from adhering against the exchange surfaces of the pipes 146.

The recirculation duct 182 can include an automatic or manual valve 190 to control the flow of steam sent by the compressor 180.

The valves, like 190 are conventional and therefore will not be commented on in detail here.

The liquid flow device 124 includes a pump 166 coupled to the removal pipe 161 and a liquid recirculation pipe 188 coupled between the pump 166 and the feed pipe 138 to recycle again through the heat exchanger 116, the concentrated solution. The flow device 124 can be deleted since the evaporation unit 110 can operate without recirculation.

The operation of the evaporation unit 110 is as follows:

The solution that is going to be evaporated penetrates through pipe 138 in the feed enclosure 114, alone or mixed with partially concentrated solution or solution at its final required concentration. The liquid passes to the heat exchange section 146 through the tube bank 146. The liquid is evaporated and the solids consequently concentrated by the heat transferred by the thermal fluid that penetrates into the casing 112 through the feed pipe 148, heating pipes 146. The incondensible gases of the thermal fluid are eliminated from the heat exchange enclosure 116 through the outlet pipe 149 and are sent either to the condensation station or to the atmosphere. The condensed vapors of the thermal fluid are discharged from the heat exchanger 116 through the removal tube 149a. Then the solution at partial concentration or the required final one, leaves the tube bank 146 and penetrates into the outlet enclosure 118 in which the vapors are separated from the liquid. The flow of recirculated solution is adjusted manually or automatically by means of valve 196; the solution is recirculated by means of the device 124 through pipe 188 and is again injected by means of the feed pipe 138.

The remaining liquid portion, known as process liquid is removed by the same system 124 through the removal pipe 169a towards the following operation or towards the following effect. A control valve 192 located in the pipe 169a keeps a consent level in the outlet encosure 118.

On the other hand, the vapors are sent through duct 160 to the vapor separator 165. The desired vapor flow is adjusted manually or automatically by valve 190 and recirculated towards the feed enclosure 114 by means of the vapor recirculaton device 122. The remaining vapors, process vapors, are sent along to the following effect or to the condenser, through the pipe 189.

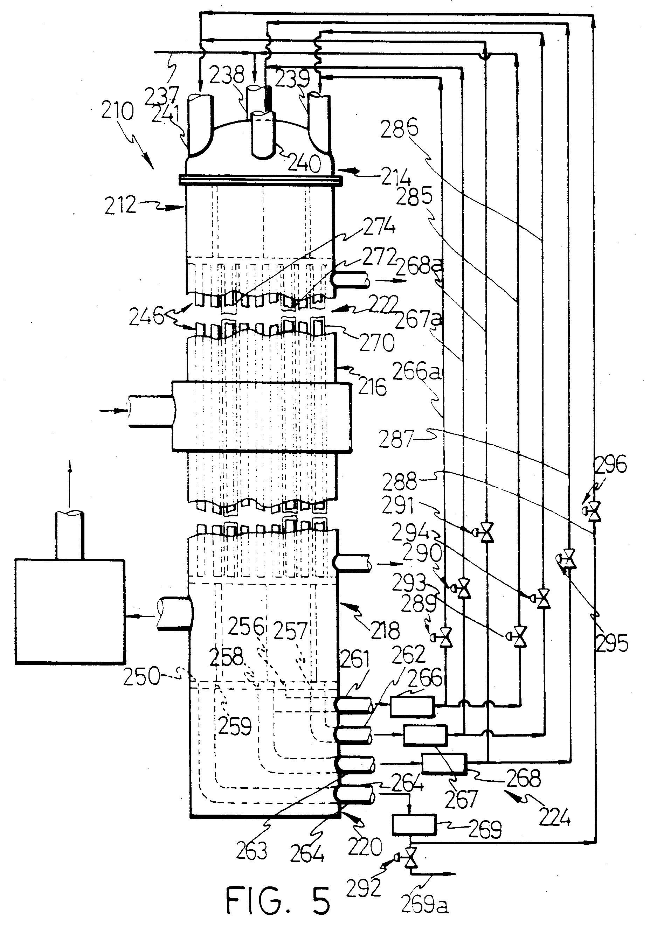

Fig. 5 describes a third embodiment of this invention corresponding to an evaporation unit 210. It is substantially identical to the liquid flow system 24, which has been replaced by the liquid flow device 224. Consequently, the evaporation unit 210 will not be described in detail.

Referring to fig. 5, the evaporation unit 210 includes an outer casing 212 with an intake enclosure or head 214 located in the top end thereof that serves to receive the solution or liquid that is going to be evaporated; a heat exchange section 216 located underneath the head 214, to concentrate by evaporation the liquid or solution that flows through the latter; a removal enclosure or base 218, located underneath heat exchange section 216, to receive the solution with partial concentration or the final required one, together with the vapors from the evaporation; a base 220, located underneath the removal enclosure 218; to vertically support the outer casing 212. The evaporation unit 210 likewise includes a vapor flow device 222 solidly coupled between the feed enclosure 214 and the removal enclosure 218; as well as a liquid flow device or system 224, rigidly or solidly coupled to the circular casing 212.

The steam flow device 222 is equipped with three ducts 270, 272 and 274 through which the vapors flow from the removal enclosure of a sector of the heat exchange tube bank 246 up to the feed enclosure of another sector or section of the exchange tube bank 246.

The liquid flow device or system 224 is equipped with four blowoff pipes 261, 262, 263 and 264 solidly coupled to the outlet openings 256-259 respectively, located in the third circular plate 250 to remove the concentrated solution from each one of their respective removal enclosures and to send the concentrated solution to the following exchange section or recirculate it to the same exchange section or send it to the storage tank, or remove it towards the following effect by means of pumps 266, 267, 268 and 269. Specifically pump 266 sends a first portion of the liquid or process liquid through a pipe 266a from the first removal enclosure to the feed pipe 239 of the second feed enclosure, and a second recirculated portion through pipe 285, from the first removal enclosure to the feed pipe 238 of the first feed enclosure.

Pump 267 sends a first portion of the liquid or process liquid through pipe 267a from the second removal enclosure to the feed pipe 240 of the third feed enclosure and a second recirculated portion through pipe 286, from the second removal enclosure to the feed pipe 239 of the second feed enclosure.

Pump 268 sends a first portion of the liquid or process liquid through pipe 268a from the third removal enclosure to the feed pipe 241 of the fourth feed enclosure and a second recirculated portion through pipe 287 from the third removal enclosure to the feed pipe 240 of the third feed enclosure.

Pump 269 sends a first portion of the liquid or process liquid through pipe 269a from the fourth removal enclosure to the storage tank or to the following effect, and a second recirculated portion through pipe 288 from the fourth removal enclosure to the feed pipe 241 of the fourth feed enclosure.

The solution flows through pipes 266a, 267a, 268a adjusted to the required flow by means of valves 289, 290, 291 and 292 respectively, which keep a constant level in the removal enclosures of the evaporation unit 210.

The evaporation operation of the unit 210 is substantially similar to that of the evaporation unit 10, with the exception that a variable liquid flow can be recirculated to its same feed enclosure through pipes 285 - 288 and control valves 293 - 296.

Even when only three embodiments have been described to demonstrate the invention, any expert in the matter will understand that changes and modifications can be made without exceeding the scope of the invention as defined in the following claims.

## Claims

1. A method of concentrating liquid, comprising the steps of:
- conveying a liquid through a heat exchange portion (16, 116, 216) of an evaporation unit from an inlet end to an outlet end thereof;
- heating the liquid conveyed through the heat exchange portion (16, 116, 216) to generate vapours and to concentrate the liquid;
- circulating vapours generated by heating the liquid in the heat exchange portion (16, 116, 216) from the outlet end of the heat exchange portion to the inlet end of the heat exchange portion for mixing the vapours with the liquid at said inlet end, to increase the velocity of the liquid;
characterized in that
- the evaporation unit is a down-flow evaporation unit
- wherein the vapours are circulated at high speed such that the liquid is converted into drops that knock against a heat exchange surface of said heat exchange portion (16,116,216) with enough energy so as to prevent the deposit of precipitated particles or to loosen them.

2. Method according to claim 1, wherein said heat exchange portion (16, 216) is divided into a plurality of evaporation sections (31, 32, 33, 34) with each evaporation section (31, 32, 33, 34) having an inlet and an outlet end and the evaporation sections are fluidly coupled together for sequentally receiving the liquid to be concentrated; and wherein the vapours are circulated from the outlet end of each preceding evaporation section (31, 32, 33) to the respective inlet end of the next evaporation section (32, 33, 34).

3. A method according to claim 2, wherein the circulation of vapours is effected through ducks situated inside the heat exchange portion (16, 216).

4. A method according to claim 2, wherein the circulation of vapours is effected through ducts situated outside the heat exchange portion (16,216).

5. A method according to claim 4, wherein a compressor (180) is used for circulating the vapours from said outlet end to said inlet end at the desired high speed.

6. A method according to any of the preceding claims, wherein the heating includes conveying a thermal fluid adjacent to an evaporation area of the heat exchange portion (16,116,216) to indirectly heat the liquid to be concentrated.

7. An evaporation unit for concentrating liquids, comprising
- a heat exchange portion (16, 116, 216);
- liquid inlet means (38, 39, 40, 41, 138, 238, 239, 240, 241) coupled to said heat exchange portion (16, 116, 216) adjacent an inlet end thereof, for conveying liquid to be concentrated into said heat exchange portion;
- liquid and vapour outlet means (51, 52, 53, 54), coupled to said heat exchange portion (16, 116, 216) adjacent an outlet end of said heat exchange portion (16, 116, 216), for removing and separating concentrated liquid and vapors from said heat exchange portion (16, 116, 216);
- heating means, positioned adjacent to said heat exchange portion (16, 116, 216), for heating liquid conveyed through said heat exchange portion (16, 116, 216);
- vapour circulating means (70, 72, 74, 180, 182, 270, 272, 274), coupled to said outlet end and to said inlet end to provide for circulation of vapour from said outlet end to said inlet end and for mixing vapours from said outlet end with liquid at the inlet end to increase the velocity of liquid conveyed through the heat exchange portion (16, 116, 216);
characterized in that
- the evaporation unit is a down-flow evaporation unit whereby the inlet end is an upper end of the heat exchange portion (16,116,216) and the outlet end is a lower end of said heat exchange portion (16, 116, 216); and in that
- the vapour circulating means (70, 72, 74, 180, 182, 270, 272, 274) are arranged to provide for circulation of vapours, during operation of the evaporation unit, at high speed such that the liquid is converted into drops that knock against a heat exchange surface of said heat exchange portion (16,116,216) with enough energy so as to prevent the deposit of precipitated particles or to loosen them.

8. An evaporation unit according to claim 7, wherein the heat exchange portion (16, 216) is divided into a plurality of evaporation sections (31, 32, 33, 34) with each evaporation section (31, 32, 33, 34) having an inlet and an outlet end and the evaporation sections are coupled together for sequentally receiving the liquid to be concentrated; and wherein the vapour circulating means (70, 72, 74, 270, 272, 274) are connected so that vapours can be circulated from the outlet end of each preceding evaporation section (31, 32, 33) to the respective inlet end of the next evaporation section (32, 33, 34).

9. Evaporation unit according to claim 8, wherein the vapour circulating means (70, 72, 74, 270, 272, 274) are situated inside the heat exchange portion (16, 216).

10. Evaporation unit according to claim 8, wherein the vapour circulating means (70, 72, 74, 270, 272, 274) are situated outside the heat exchange portion (16, 216).

11. An evaporation unit according to claim 10, wherein the vapour circulating means (180, 182) include a compressor (180).

12. Evaporation unit according to any of claims 7 - 11, wherein the unit comprises means for conveying a thermal fluid adjacent to an evaporation area of the heat exchange portion (16,116,216) to indirectly heat the liquid to be concentrated.

## Patentansprüche

1. Verfahren zum Konzentrieren einer Flüssigkeit mit den Schritten:
- Fördern einer Flüssigkeit durch einen Wärmetauschabschnitt (16, 116, 216) einer Verdampfungseinheit von einem Einlaßende zu einem Auslaßende dessen;
- Erwärmen der durch den Wärmetauschabschnitt (16, 116, 216) geförderten Flüssigkeit zur Erzeugung von Dämpfen und zur Konzentration der Flüssigkeit;
- Zirkulieren der Dämpfe, die durch Erwärmung der Flüssigkeit in dem Wärmetauschabschnitt (16, 116, 216) erzeugt werden, von dem Auslaßende des Wärmetauschabschnitts zu dem Einlaßende des Wärmetauschabschnitts für eine Vermischung der Dämpfe mit der Flüssigkeit an dem Einlaßende, um die Geschwindigkeit der Flüssigkeit zu erhöhen;
dadurch **gekennzeichnet**, daß
- die Verdampfungseinheit eine Verdampfungseinheit mit einem Abwärtsfluß ist,
- wobei die Dämpfe bei einer hohen Geschwindigkeit derart zirkuliert werden, daß die Flüssigkeit in Tropfen überführt wird, die mit genügend Energie derart gegen eine Wärmetauschoberfläche des Wärmetauschabschnitts (16, 116, 216) schlagen, daß die Ablagerung von ausgefällten Partikeln verhindert wird, oder diese abgelöst werden.

2. Verfahren nach Anspruch 1, wobei der Wärmetauschabschnitt (16, 216) in mehrere Verdampfungsbereiche (31, 32, 33, 34) geteilt ist, wobei jeder Verdampfungsbereich (31, 32, 33, 34) ein Einlaß- und ein Auslaßende aufweist, und die Verdampfungsbereiche für eine aufeinanderfolgende Aufnahme der zu konzentrierenden Flüssigkeit miteinander gekoppelt sind; und wobei die Dämpfe von dem Auslaßende eines jeden vorangehenden Verdampfungsbereichs (31, 32, 33) zum jeweiligen Einlaßende des nächsten Verdampfungsbereichs (32, 33, 34) zirkuliert werden.

3. Verfahren nach Anspruch 2, wobei die Zirkulierung der Dämpfe durch Leitungen bewirkt wird, die innerhalb des Wärmetauschabschnitts (16, 216) angeordnet sind.

4. Verfahren nach Anspruch 2, wobei die Zirkulierung der Dämpfe durch Leitungen bewirkt wird, die außerhalb des Wärmetauschabschnitts (16, 216) angeordnet sind.

5. Verfahren nach Anspruch 4, wobei ein Kompressor (180) für das Zirkulieren der Dämpfe von dem Auslaßende zu dem Einlaßende mit der gewünschten hohen Geschwindigkeit verwendet wird.

6. Verfahren nach einem der vorangehenden Ansprüche, wobei das Erwärmen den Schritt der Förderung eines Wärmefluids an einen Verdampfungsbereich des Wärmetauschabschnitts (16, 116, 216) anliegend aufweist, um die zu konzentrierende Flüssigkeit indirekt zu erwärmen.

7. Verdampfungseinheit zur Konzentration von Flüssigkeiten, mit:
- einem Wärmetauschabschnitt (16, 116, 216);
- Flüssigkeitseinlaßeinrichtungen (38, 39, 40, 41, 138, 238, 239, 240, 241), die mit dem Wärmetauschabschnitt (16, 116, 216) an ein Einlaßende dessen anliegend gekoppelt sind, zur Förderung der zu konzentrierenden Flüssigkeit in den Wärmetauschabschnitt;
- Flüssigkeits- und Dampfauslaßeinrichtungen (51, 52, 53, 54), die mit dem Wärmetauschabschnitt (16, 116, 216) an ein Auslaßende des Wärmetauschabschnitts (16, 116, 216) anliegend gekoppelt sind, zum Entfernen und Trennen von konzentrierter Flüssigkeit und Dämpfen von dem Wärmetauschabschnitt (16, 116, 216);
- Erwärmungseinrichtungen, die an den Wärmetauschabschnitt (16, 116, 216) zur Erwärmung der durch den Wärmetauschabschnitt (16, 116, 216) geförderten Flüssigkeit anliegend angeordnet sind;
- Dampfzirkulierungseinrichtungen (70, 72, 74, 180, 182, 270, 272, 274), die an das Auslaßende und das Einlaßende gekoppelt sind, um für die Zirkulierung von Dampf von dem Auslaßende zu dem Einlaßende und für Vermischung von Dämpfen von dem Auslaßende mit Flüssigkeit an dem Einlaßende zu sorgen, so daß die Geschwindigkeit der durch den Wärmetauschabschnitt (16, 116, 216) geförderten Flüssigkeit erhöht wird;
dadurch **gekennzeichnet**, daß
- die Verdampfungseinheit eine Verdampfungseinheit mit Abwärtsfluß ist, wobei das Einlaßende ein oberes Ende des Wärmetauschabschnitts (16, 116, 216), und das Auslaßende ein unteres Ende des Wärmetauschabschnitts (16, 116, 216) ist; und dadurch, daß
- die Dampfzirkulationseinrichtungen (70, 72, 74, 180, 182, 270, 272, 274) derart angeordnet sind, daß für eine Zirkulierung von Dämpfen während des Betriebs der Verdampfungseinheit mit einer hohen Geschwindigkeit derart gesorgt wird, daß die Flüssigkeit in Tropfen überführt wird, die mit genügend Energie derart gegen eine Wärmetauschoberfläche des Wärmetauschabschnitts (16, 116, 216) schlagen, daß die Ablagerung von ausgefällten Partikeln verhindert wird, oder diese abgelöst werden.

8. Verdampfungseinheit nach Anspruch 7, wobei der Wärmetauschabschnitt (16, 216) in mehrere Verdampfungsbereiche (31, 32, 33, 34) geteilt ist, wobei ein jeder Verdampfungsbereich (31, 32, 33, 34) ein Einlaß- und ein Auslaßende aufweist, und die Verdampfungsbereiche für eine aufeinanderfolgende Aufnahme der zu konzentrierenden Flüssigkeit miteinander gekoppelt sind; und wobei die Dampfzirkulierungseinrichtungen (70, 72, 74, 270, 272, 274) derart verbunden sind, daß Dämpfe von dem Auslaßende eines jeden vorangehenden Verdampfungsbereichs (31, 32, 33) zu dem jeweiligen Einlaßende des nächsten Verdampfungsbereichs (32, 33, 34) zirkuliert werden können.

9. Verdampfungseinheit nach Anspruch 8, wobei die Dampfzirkulierungseinrichtungen (70, 72, 74, 180, 182, 270, 272, 274) innerhalb des Wärmetauschabschnitts (16, 216) angeordnet sind.

10. Verdampfungseinheit nach Anspruch 8, wobei die Dampfzirkulierungseinrichtungen (70, 72, 74, 180, 182, 270, 272, 274) außerhalb des Wärmetauschabschnitts (16, 216) angeordnet sind.

11. Verdampfungseinheit nach Anspruch 10, wobei die Dampfzirkulierungseinrichtungen (180, 182) einen Kompressor (180) aufweisen.

12. Verdampfungseinheit nach einem der Ansprüche 7 bis 11, wobei die Einheit eine Einrichtung zum Fördern eines Wärmefluids an einen Verdampfungsbereich des Wärmetauschabschnitts (16, 116, 216) anliegend aufweist, um die zu konzentrierende Flüssigkeit indirekt zu erwärmen.

## Revendications

1. Procédé pour concentrer un liquide, comprenant les étapes ci-après:
- véhiculer un liquide à travers une section d'échange de chaleur (16, 116, 216) d'une unité d'évaporation, depuis son extrémité d'entrée à son extrémité de sortie;
- échauffer le liquide véhiculé à travers la section d'échange de chaleur (16, 116, 216) afin de générer de la vapeur et de concentrer le liquide;
- faire circuler la vapeur générée par l'échauffement du liquide dans la section d'échange de chaleur (16, 116, 216), depuis l'extrémité de sortie de la section d'échange de chaleur à l'extrémité d'entrée de la section d'échange de chaleur, afin de mélanger la vapeur au liquide au niveau de ladite extrémité d'entrée afin d'augmenter la vitesse du liquide;
caractérisé en ce que l'unité d'évaporation est une unité d'évaporation à flux descendant dans laquelle la vapeur est mise en circulation à vitesse élevée de manière que le liquide soit transformé en gouttes qui frappent une surface d'échange de chaleur de ladite section d'échange de chaleur (16, 116, 216) avec suffisamment d'énergie pour empêcher que des particules précipitées se déposent ou soient relâchées.

2. Procédé selon la revendication 1, dans lequel ladite section d'échange de chaleur (16, 216) est divisée en plusieurs sections d'évaporation (31, 32, 33, 34), chacune des sections d'évaporation (31, 32, 33, 34) ayant une extrémité d'entrée et une extrémité de sortie, et les sections d'évaporation sont en communication de fluide afin de recevoir de manière séquentielle le liquide à concentrer; et dans lequel la vapeur est mise en circulation depuis l'extrémité de sortie de chaque section d'évaporation précédente (31, 32, 33, 34) vers l'extrémité d'entrée respective de la section d'évaporation suivante (32, 33, 34).

3. Procédé selon la revendication 2, dans lequel la circulation de la vapeur est effectuée à travers de tubes situés à l'intérieur de la section d'échange de chaleur (16, 216).

4. Procédé selon la revendication 2, dans lequel la circulation de la vapeur est effectuée à travers de tubes situés à l'extérieur de la section d'échange de chaleur (16, 216).

5. Procédé selon la revendication 4, dans lequel un compresseur (180) est utilisé pour faire circuler la vapeur depuis ladite extrémité de sortie vers ladite extrémité d'entrée à la vitesse élevée souhaitée.

6. Procédé selon l'une quelconque des revendications précédentes dans lequel l'échauffement consiste à véhiculer un fluide thermique à côté d'une zone d'évaporation de la section d'échange de chaleur (16, 116, 216) afin d'échauffer indirectement le liquide à concentrer.

7. Unité d'évaporation pour concentrer des liquides, comprenant
- une section d'échange de chaleur (16, 116, 216);
- des moyens d'entrée de liquide (38, 39, 40, 41, 138, 238, 239, 240, 241) couplés à ladite section d'échange de chaleur (16, 116, 216) voisine de son extrémité d'entrée, afin de véhiculer le liquide à concentrer dans ladite section d'échange de chaleur;
- des moyens de sortie de liquide (51, 52, 53, 54) couplés à ladite section d'échange de chaleur (16, 116, 216) voisine d'une extrémité de sortie de ladite section d'échange de chaleur (16, 116, 216) afin d'enlever et de séparer le liquide concentré et la vapeur de ladite section d'échange de chaleur (16, 116, 216);
- des moyens d'échauffement positionnés à côté de ladite section d'échange de chaleur (16, 116, 216) pour échauffer le liquide véhiculé à travers ladite section d'échange de chaleur (16, 116, 216);
- des moyens pour faire circuler la vapeur (70, 72, 74, 180, 182, 270, 272, 274), couplés à ladite extrémité de sortie et à ladite extrémité d'entrée pour assurer la circulation da la vapeur depuis ladite extrémité de sortie vers ladite extrémité d'entrée et pour mélanger la vapeur de ladite extrémité de sortie avec le liquide au niveau de ladite extrémité d'entrée afin d'augmenter la vitesse du liquide véhiculé à travers la section d'échange de chaleur (16, 116, 216);
caractérisé en ce que
- l'unité d'évaporation est une unité d'évaporation à flux descendant, l'extrémité d'entrée étant une extrémité supérieure de la section d'échange de chaleur (16, 116, 216) et l'extrémité de sortie étant une extrémité inférieure de ladite section d'échange de chaleur (16, 116, 216);
et en ce que
- les moyens de circulation de la vapeur (70, 72, 74, 180, 182, 270, 272, 274) sont disposés de manière à assurer la circulation de la vapeur pendant le fonctionnement de l'unité d'évaporation, à vitesse élevée, afin que le liquide soit transformé en gouttes qui frappent une surface d'échange de chaleur de ladite section d'échange de chaleur (16, 116, 216) avec suffisamment d'énergie pour éviter que des particules précipitées se déposent ou soient relâchées.

8. Unité d'évaporation selon la revendication 7, dans laquelle la section d'échange de chaleur (16, 216) est divisée en plusieurs sections d'évaporation (31, 32, 33, 34), chacune des sections d'évaporation (31, 32, 33, 34) ayant une extrémité d'entrée et une extrémité de sortie, et les sections d'évaporation sont couplées pour recevoir de manière séquentielle le liquide à concentrer; et dans laquelle les moyens de circulation de vapeur (70, 72, 74, 270, 272, 274) sont reliés afin que la vapeur puisse être circulée depuis l'extrémité de sortie de chaque section d'évaporation précédente (31, 32, 33, 34) vers l'extrémité d'entrée respective de la section d'évaporation suivante (32, 33, 34).

9. Unité d'évaporation selon la revendication 8, dans laquelle les moyens de circulation de la vapeur (70, 72, 74, 270, 272, 274) sont situés à l'intérieur de la section d'échange de chaleur (16, 216).

10. Unité d'évaporation selon la revendication 8, dans laquelle les moyens de circulation de la vapeur (70, 72, 74, 270, 272, 274) sont situés à l'extérieur de la section d'échange de chaleur (16, 216).

11. Unité d'évaporation selon la revendication 10, dans laquelle les moyens de circulation de la vapeur (180, 182) comprennent un compresseur (180).

12. Unité d'évaporation selon l'une des revendications 7 à 11, dans laquelle l'unité comprend des moyens pour véhiculer un fluide thermique à côté d'une zone d'évaporation de la section d'échange de chaleur (16, 116, 216) afin d'échauffer de manière indirecte le liquide à concentrer.
